Europäisches Patentamt

European Patent Office

Office européen des brevets

(19)

(11) Veröffentlichungsnummer : **0 009 275**
**B1**

(12) **EUROPÄISCHE PATENTSCHRIFT**

(45) Veröffentlichungstag der Patentschrift :
**05.10.83**

(21) Anmeldenummer : **79200484.8**

(22) Anmeldetag : **01.09.79**

(51) Int. Cl.$^3$ : **C 08 L 23/02, C 08 L 95/00**

(54) **Formmassen aus thermoplastischen Kunststoffen und Rückständen der Kohlehydrierung.**

(30) Priorität : **11.09.78 DE 2839461**

(43) Veröffentlichungstag der Anmeldung :
**02.04.80 Patentblatt 80/07**

(45) Bekanntmachung des Hinweises auf die Patenterteilung : **05.10.83 Patentblatt 83/40**

(84) Benannte Vertragsstaaten :
**BE FR GB LU NL**

(56) Entgegenhaltungen :
**DE A 1 964 212**
**DE A 2 801 154**
**FR A 1 473 344**
**GB A 1 156 983**

(73) Patentinhaber : **Bergwerksverband GmbH**
**Franz-Fischer-Weg 61**
**D-4300 Essen 13 (DE)**

(72) Erfinder : **Romey, Ingo, Dr.**
**Sandkamp 25**
**D-4224 Hünxe 2 (DE)**
Erfinder : **El-Roy, Menachem**
**26, Vitkinstrasse**
**Halfa (IL)**

0 009 275

Formmassen aus thermoplastischen Kunststoffen und Rückständen der Kohlehydrierung

Die Erfindung betrifft Formmassen, bestehend aus thermoplastischen Stoffgemischen aus Polyolefinen sowie deren Copolymerisaten, die polare, aromatische oder cyclische Monomeren enthalten, und aus Verflüssigungsprodukten aus Kohle sowie gegebenenfalls gebräuchlichen Füllstoffen.

Durch eine Hydrierung von Kohle in Öl-Suspensionen unter hohem Druck und bei erhöhter Temperatur werden in der Mehrzahl flüchtige Verbindungen erhalten. Nach dem Abtrennen der bei Normaldruck, entsprechend dem angestrebten Erweichungspunkt des Rückstandes, über 200 °C bis oberhalb 350 °C siedenden Produkte, erhält man einen schmelzbaren Rückstand, der mit Asche, nicht reagierter Kohle und Katalysator verunreinigt ist. Der Erweichungspunkt dieses Rückstandes liegt zwischen 70 und 200 °C nach DIN 1995, entsprechend einem veränderlichen Gehalt an nichtschmelzbaren Stoffen. Dieser Rückstand ist durch eine große Zahl an kondensierten Ringen und eine hohe Aromatizität charakterisiert. Ähnliche Rückstände werden bei bekannten Kohlehydrierungsverfahren, wie beispielsweise dem Pott-Broche-Verfahren oder dem Bergius-Pier-Verfahren, erhalten.

Formmassen der eingangs genannten Art können auf den gebräuchlichen Verarbeitungsmaschinen gepreßt, gegossen oder extrudiert werden. Sie werden unter anderem auf dem Bau- und Installationssektor für Rohre, Profile, Behälter sowie Abdichtungs- und Schutzzwecke eingesetzt, beispielsweise als Folien zur Abdichtung gegen Wasser.

Formmassen aus Kunststoffmischungen mit Bitumen sind beispielsweise aus der DE-AS 24 41 203 bekannt. Sie bestehen im wesentlichen aus Äthylen-Copolymerisaten und einem Extrakt- oder Fällungsbitumen, welches eine Penetration bei 25 °C kleiner als 10 nach DIN 1995 aufweist. Der Erweichungspunkt dieser Bitumina liegt unter 63 °C.

Auch in der DE-AS 17 20 169 ist eine Mischung aus Bitumen und einem Mischpolymerisat beschrieben, bei dem das Bitumen einen Erweichungspunkt unter 63 °C besitzen muß, um mit Blockmischpolymerisaten aus Butadien und Styrol mischbar zu sein.

Dagegen zeigt die DE-AS 11 85 372, daß Bitumina mit einem Erweichungspunkt von 190-200 °C nur bis zu 20 % mit Polyolefinen mischbar sind. Erst wenn im Kunststoffanteil Copolymere mit einem hohen Gehalt an Vinylacetat, beispielsweise mit 60 Gew.-% Vinylacetat, vorhanden sind, kann Steinkohlenteerpech mit einem Erweichungspunkt von 160 °C bis auf 40 Gew.-% der Gesamtmischung der Kunststoffmischung beigegeben werden (DE-AS 21 48 186).

Aus der DE-OS 1 964 212 sind thermoplastische Formmassen aus Mischungen aus einem Olefin und einem Pech oder einem pechartigen Material bekannt. Dabei wird als Pech vorzugsweise Kohlenteerpech und als pechartiges Material in Pech oder Teeröl dispergierte Steinkohle oder Kohlenaufbereitungsabgänge vorgeschlagen. Das Pech bzw. pechartige Material enthält auch niedermolekulare Bestandteile, welche relativ wertvoll sind und deshalb besser für andere Zwecke als zur Herstellung von Formmassen verwendet werden sollten. Es handelt sich dabei also nicht um einen Rückstand im verfahrenstechnischen Sinne und auch nicht um einen solchen, der von niedermolekularen Bestandteilen befreit ist.

Der Erfindung liegt die Aufgabe zugrunde, möglichst große Mengen an Hydrierrückständen mit Kunststoffen mischbar zu machen, wobei sie sich dennoch mit üblichen Kunststoffverarbeitungsmaschinen formen, pressen, gießen und extrudieren lassen.

Diese Aufgabe wird erfindungsgemäß durch die Formmassen gemäß Anspruch 1 gelöst.

Weitere Ausbildungen der Erfindung bestehen darin, daß

a. der Rückstand bis zu 33 Gew.-% feste, nichtschmelzende Stoffe enthält,

b. der Rückstand von festen, nichtschmelzenden Stoffen befreit ist,

c. die Polyolefine einen Schmelzindex MFI 190/2,5 von 0,1 bis 1,7 g/10 min haben,

d. in den Copolymerisaten der Anteil an polaren Monomeren zwischen 10 und 80 Gew.-% und deren Erweichungspunkt nach DIN 1995 zwischen 70 und 190 °C liegt und

e. beim Ansteigen des Anteiles der polaren, aromatischen und/oder cyclischen Monomeren von 5 auf 30 Gew.-% auch der Füllstoffanteil bis auf 40 Gew.-%, bezogen auf die gesamte Formmasse, ansteigt.

Es wurde überraschenderweise gefunden, daß man die bei der extraktiven Kohlehydrierung als Rückstand anfallenden Verflüssigungsprodukte aus Kohle mit einem Erweichungspunkt von 70 bis 200 °C nach DIN 1995 in Mengen von 20 bis 45 Gew.-% der Gesamtmischung zu einem polyolefinischen Polymerisat zumischen kann und dennoch Reißfestigkeiten von nicht kleiner als 10 N/mm$^2$ und Reißdehnungen von nicht kleiner als 100 % erhält. Solche Werte wurden bisher bei einem Bitumenzusatz zu Polyolefinen nicht erreicht.

Geeignete Polyolefine sind beispielsweise Hochdruck-Polyäthylen (HD-Polyäthylen) niedriger Dichte, Polypropylen oder Copolymere von Äthylen und Propylen. Polare Copolymere können beispielsweise Vinylacetat-, Vinylchlorid- oder Acrylnitrilgruppen enthalten. Aromatische Copolymere können beispielsweise Styrol oder dessen Homologen und cyclische Copolymere Terpene mit Olefinen und Dienen, z. B. Äthylidennorbornen, enthalten.

Es wurde ferner gefunden, daß Mischpolymerisate aus Butadien und polaren Monomeren, beispielsweise Acrylnitril, oder aromatischen Monomeren, beispielsweise Styrol, zur Erhaltung einer hohen Reißdehnung der Polyolefin-Rückstandsmischungen, dagegen Mischpolymere mit Vinylchlorid als Monomerenbestandteil zu einer Erhöhung der Reißfestigkeit beitragen. Das Vinylacetat-Monomere

2

verursacht dagegen eine gleichzeitige Senkung der Reißfestigkeit und Reißdehnung. Durch eine entsprechende Dosierung der vorgenannten Mischpolymeren in den Kunststoffmischungen erhält man ein breites Spektrum der Reißfestigkeit bei geringfügig veränderter Reißdehnung bis auf ein solches der Reißdehnung bei geringfügig veränderter Reißfestigkeit. Auf diese Weise sind bei Kunststoffmischungen mit einem Anteil von 20 bis 45 Gew.-% Rückstand Reißfestigkeiten zwischen etwa 10 und 20 N/mm$^2$ bei Reißdehnungen zwischen 100 und 600 % einstellbar. Beträgt der Rückstandsanteil der Kunststoffmischung jedoch nur 10 bis 20 Gew.-%, steigt die Reißdehnung auf 670 % und darüber, während sie bei 50 bis 70 Gew.-% Rückstandsanteil bis auf 20 % sinkt. Eine so große Flexibilität bei der Zusammenstellung von Formmassen aus thermoplastischen Kunststoffen und kohlenstoffhaltigen Materialien, insbesondere Peche, Asphalte, Bitumina oder Kohleverflüssigungsprodukte, ist bisher nicht beschrieben worden.

Auch auf die Verträglichkeit der Kunststoffe mit Füllstoffen in der Formmasse, beispielsweise Anthrazitpulver, haben die polaren und/oder aromatischen Monomeren der Mischpolymerisate großen Einfluß. So kann der Füllstoffgehalt bis auf 40 Gew.-% der Formmasse ansteigen, während der Polymeranteil nur 21 bis 35 Gew.-% beträgt, wenn der Anteil der Monomeren mit polaren und/oder aromatischen Gruppen 8 bis 14 Gew.-% und darüber in der gesamten Formmasse beträgt.

Je nach dem Gehalt des Rückstandes aus der Kohlehydrierung an festen, nichtschmelzenden Stoffen, also ungelösten Kohlebestandteilen, Mineralien und gegebenenfalls Katalysatoren, ist eine Zugabe von gebräuchlichen Füllstoffen, wie beispielsweise Ruß, Anthrazitstaub, Kreide, Gesteinsmehl, möglich.

Das Abtrennen der festen, nichtschmelzenden Stoffe aus dem erfindungsgemäß eingesetzten Rückstand kann bei Formmassen, an die hohe Anforderungen z. B. bezüglich Geschmeidigkeit gestellt werden, erwünscht sein. Die Abtrennung kann in bekannter Weise, beispielsweise durch Druckfiltration, erfolgen.

Aus den Formmassen können in bekannter Weise nach dem Mischen und gegebenenfalls Kneten der Mischungsbestandteile bei Temperaturen von 140 bis 190 °C mit gebräuchlichen Maschinen, zumeist mit Extrudern oder Spritzgußmaschinen, Formkörper, Folien usw. hergestellt werden.

### Beispiele

Der erfindungsgemäß eingesetzte Rückstand aus der Verflüssigung von Kohle mit einem Erweichungspunkt von 70 bis 200 °C nach DIN 1995 wird beispielsweise auf folgende Weise hergestellt :

Auf kleiner als 200 µm aufgemahlene Gasflammkohle wird mit einem Anreiböl (Antrazenöl) und einem Katalysator (Cobalt-Molybdän) in einen Autoklaven eingefüllt. Je nach angestrebter Zusammensetzung des Rückstandes wird mehr oder weniger Wasserstoff, entweder gasförmig oder in Form eines wasserstoffabgebenden Anreiböls, zugesetzt.

Bei hohen Drücken von etwa 100 bis 700 bar und bei Temperaturen von etwa 400 bis 500 °C wird die Kohle verflüssigt. Nach einer Reaktionszeit von 2 bis 3 Stunden wird der Autoklav abgekühlt und das Reaktionsgemisch entnommen. Dann werden die bei Normaldruck über 350 °C siedenden Produkte abgetrennt und man erhält als Rückstand ein erfindungsgemäß eingesetztes Produkt mit einem Erweichungspunkt von 129 °C nach DIN 1995.

Die folgende Tabelle zeigt die Flexibilität bei der Zusammenstellung der Formmassen und die damit erzielbare Einstellung von verschiedenen Reißfestigkeiten und Reißdehnungen, die bei Prüfkörpern bei Zugversuchen nach DIN 53 455 gefunden wurden.

| Beispiel | Gew.-% | Reißfest. N/mm$^2$ | Reißdehnung % | Bemerkungen |
|---|---|---|---|---|
| 1. a) Rückstand, EP = 129° C | 30 | | | Polypropylen ohne polare Gruppen |
| b) Polypropylen SI-MFI 190/2,5 = 0,1 g/10 min | 70 | 14 | 110 | |
| 2. a) Rückstand, EP = 129° C | 20 | | | Hohe Reißfestigkeit durch Zugabe von VC |

| Beispiel | Gew.-% | Reißfest. N/mm$^2$ | Reiß-dehnung % | Bemerkungen |
|---|---|---|---|---|
| b) Äthylen-Vinylacetat-Vinyl-chlorid Mischpolymer (51 % VC, 31 % VA, 18 % PE) | 80 | 21 | 260 | |
| 3. a) Rückstand, EP = 129° C | 30 | | | kleiner Ge-halt an pola-ren Komponen-ten |
| b) Äthylen-Vinylacetat-Vinyl-chlorid Mischpolymer (51 % VC, 31 % VA, 18 % PE) | 4 | | | |
| c) HD-Polyäthylen SI=MI 190/2,5=0,1-0,3 g/10min | 66 | 10 | 213 | |
| 4. a) Rückstand, EP = 129° C | 30 | | | Vinylacetat Mischpolymer mit niederem VA-Gehalt |
| b) Äthylen-Vinylacetat-Copolymer (EP = 95° C) | 50 | | | |
| c) HD-Polyäthylen SI=MFI 190/2,5=0,1-0,3 g/10min | 20 | 9,5 | 213 | |
| 5. a) Rückstand, EP = 129° C | 45 | | | Hoher Rück-standsgehalt kleiner pola-rer Gehalt |
| b) Äthylen-Vinylacetat-Copolymer (60 % VA) EP = 100° C | 7,5 | | | |
| c) HD-Polyäthylen SI=MFI 190/2,5=0,1-0,3 g/10min | 47,5 | 10 | 100 | |
| 6. a) Rückstand, EP = 120° C | 40 | | | Hohe Reißdeh-nung |
| b) Äthylen-Vinylazetat-Copo-lymer (EP = 92° C, VA = 15 %) | 60 | 5 | 600 | |
| 7. a) Rückstand, EP = 129° C | 22 | | | Hohe Reidehn-nung, mittle-re Reißfestig-keit |
| b) Äthylen-Vinylazetat-Copoly-mer (EP = 72° C) | 60 | | | |
| c) HD-Polyäthylen SI=MFI 190/2,5=0,1-0,3 g/10min | 18 | 10 | 600 | |

**0 009 275**

## Ansprüche

1. Formmassen, bestehend aus
a) thermoplastischen Stoffgemischen aus Polyolefinen und/oder Olefincopolymeren, die polare, aromatische oder zyklische Monomere enthalten und
b) Verflüssigungsprodukten aus Kohle sowie
c) ggf. gebräuchlichen Füllstoffen, dadurch gekennzeichnet, daß das Verflüssigungprodukt ein bei der extraktiven Kohlehydrierung anfallender Rückstand mit einem Erweichungspunkt von 70-200 °C, vorzugsweise von 120-200 °C, nach DIN 1995 ist.

2. Formmassen nach Anspruch 1, dadurch gekennzeichnet, daß der Rückstand bis zu 33 Gew.-% feste, nichtschmelzende Stoffe enthält.

3. Formmassen nach Anspruch 1, dadurch gekennzeichnet, daß der Rückstand von festen, nichtschmelzenden Stoffen befreit ist.

4. Formmassen nach Anspruch 1 bis 3, dadurch gekennzeichnet, daß die Polyolefine einen Schmelzindex MFI 190/2,5 von 0,1-1,7 g/10 min haben.

5. Formmassen nach Anspruch 1 bis 4, dadurch gekennzeichnet, daß in den Copolymerisaten der Anteil an polaren Monomeren zwischen 10 und 80 Gew.-% und deren Erweichungspunkt zwischen 70 und 190 °C nach DIN 1995 liegt.

6. Formmassen nach Anspruch 1 bis 5, dadurch gekennzeichnet, daß beim Ansteigen des Anteils der polaren, aromatischen und/oder cyclischen Monomeren von 5 auf 30 Gew.-% auch der Füllstoffanteil bis auf 40 Gew.-%, bezogen auf die gesamte Formmasse, ansteigt.

7. Formmassen nach einem oder mehreren der Ansprüche 1 bis 6, dadurch gekennzeichnet, daß sie als Komponente a) Mischpolymerisate aus Butadien und polaren oder aromatischen Monomeren enthalten.

8. Formmassen nach einem oder mehreren der Ansprüche 1 bis 6, dadurch gekennzeichnet, daß sie als Komponente a) Mischpolymerisate mit Vinylchlorid als monomerem Bestandteil enthalten.

## Claims

1. Moulding materials, consisting of
a) thermoplastic material mixtures of polyolefins and/or olefin copolymers which contain polar, aromatic or cyclic monomers and
b) liquefaction products of coal and
c) where appropriate conventional fillers, characterized in that the liquefaction product is a residue occurring in extractive carbohydration with a softening point of from 70 to 200 °C, preferably from 120 to 200 °C, according to DIN (German Industrial Standard) 1995.

2. Moulding materials according to Claim 1, characterized in that the residue contains up to 33 % by weight of solid, non-melting substances.

3. Moulding materials according to Claim 1, characterized in that the residue is released by solid, non-melting substances.

4. Moulding materials according to Claims 1 to 3, characterized in that the polyolefins have a melt index MFI 190/2,5 of from 0.1 to 1.7 g/10 min.

5. Moulding materials according to Claims 1 to 4, characterized in that in the copolymerizates the proportion of polar monomers is between 10 and 80 % by weight and their softening point is between 70 and 190 °C according to DIN 1995.

6. Moulding materials according to Claims 1 to 5, characterized in that as the proportion of the polar, aromatic and/or cyclic monomers increases from 5 to 30 % by weight the proportion of filler also increases up to 40 % by weight, relative to the total moulding material.

7. Moulding materials according to one or more of Claims 1 to 6, characterized in that they contain, as component a), mixed polymerizates of butadiene and polar or aromatic monomers.

8. Moulding materials according to one or more of Claims 1 to 6, characterized in that they contain, as component a), mixed polymerizates with vinyl chloride as the monomer constituent.

## Revendications

1. Compositions moulables constituées :
a) de mélanges de matières thermoplastiques de polyoléfines et/ou de copolymères d'oléfines, qui contiennent des monomères polaires, aromatiques ou cycliques, et
b) de produits de liquéfaction de charbon, ainsi que,
c) le cas échéant, de charges usuelles, caractérisées en ce que le produit de liquéfaction est un résidu se formant lors de l'hydrogénation extractive du charbon, avec un point de ramollissement de 70-200 °C, de préférence de 120-200 °C selon DIN 1995.

2. Compositions moulables suivant la revendication 1, caractérisée en ce que le résidu contient

5

jusqu'à 33 % en poids de substances solides, ne fondant pas.

3. Compositions moulables suivant la revendication 1, caractérisées en ce que le résidu est débarrassé des substances solides, ne fondant pas.

4. Compositions moulables suivant l'une quelconque des revendications 1 à 3, caractérisées en ce que les polyoléfines ont un indice de fusion MFI 190/2,5 de 0,1-1,7 g/10 mn.

5. Compositions moulables suivant l'une quelconque des revendications 1 à 4, caractérisées en ce que dans les copolymères, la proportion de monomères polaires est comprise entre 10 et 80 % en poids et en ce que leur point de ramollissement est entre 70 et 190 °C selon DIN 1995.

6. Compositions moulables suivant l'une quelconque des revendications 1 à 5, caractérisées en ce que lors de l'augmentation de la proportion des monomères polaires, aromatiques et/ou cycliques de 5 à 30 % en poids, la proportion de charges monte jusqu'à 40 % en poids par rapport à la composition moulable totale.

7. Compositions moulables suivant une ou plusieurs des revendications 1 à 6, caractérisées en ce qu'elles contiennent comme constituant a) des copolymères de butadiène et de monomères polaires ou aromatiques.

8. Compositions moulables suivant une ou plusieurs des revendications 1 à 6, caractérisées en ce qu'elles contiennent comme constituant a) des copolymères avec du chlorure de vinyle comme constituant monomère.